# EUROPÄISCHE PATENTSCHRIFT

(11) **EP 0 607 194 B1**
(45) Veröffentlichungstag und Bekanntmachung des Hinweises auf die Patenterteilung: **26.07.1995**
(21) Anmeldenummer: 92920371.9
(22) Anmeldetag: 01.10.1992
(51) Int. Cl.: C08K 3/22, C08K 3/00, C08K 9/10, C08L 3/02

(54) **VERFAHREN ZUR HERSTELLUNG STABILISIERTER STÄRKE**
METHOD OF PRODUCING STABILIZED STARCH
PROCEDE DE FABRICATION D'AMIDON STABILISE

(30) Priorität: 11.10.1991 DE 4133680
(43) Veröffentlichungstag der Anmeldung: 27.07.1994
(73) Patentinhaber: METALLGESELLSCHAFT Aktiengesellschaft, 60015 Frankfurt (DE)
(72) Erfinder: GRIEBLER, Wolf-Dieter, D-4130 Moers 1 (DE); AMIRZADEH-ASL, Djamschid, D-4130 Moers 1 (DE)
(86) Internationale Anmeldenummer: EP9202270
(87) Internationale Veröffentlichungsnummer: WO9307207

(56) Entgegenhaltungen:
- GB-A- 1 600 497
- DATABASE WPIL Week 3192, Derwent Publications Ltd., London, GB; AN 92-256108 & JP-A-4 174 795

## Beschreibung

Die Erfindung betrifft ein Verfahren zur Herstellung stabilisierter Stärke.

Als natürlicher und preiswerter Rohstoff wird Stärke in der Industrie vielseitig eingesetzt. Neben dem Einsatz der Stärke in der Nahrungsmittelindustrie zur Fabrikation von beispielsweise Stärkezucker, Glucosesirup, Dextrin, Puddings, Kartoffelsago und Lakritzen wird Stärke bei der Herstellung von Kleister und Klebstoffen, als papierhilfsmittel, z.B. zum Leimen von Papier, als Verdickungsmittel für Druckfarben und als Seifenzusatz verwendet. Darüber hinaus werden Stärkeprodukte als natürliche Polymere mit synthetischen Polymeren kombiniert, um deren Eigenschaften zu verbessern. Dabei ist jedoch nachteilig, daß sich die mechanischen Eigenschaften der synthetischen Polymere durch die Kombination mit Stärke verschlechtern. Ferner zersetzt sich die Stärke bei höheren Temperaturen in ihre Monosaccharide, so daß der Einsatz von Copolymeren, gebildet aus synthetischen Polymeren und Stärke, nur unterhalb von ca. 190°C möglich ist. Zudem weist Stärke eine relativ geringe chemische Beständigkeit auf, so daß sich auch dadurch Schwierigkeiten bei der Verwendung der Stärke in der Industrie ergeben.

In der GB-PS 1 600 497 werden Stärkepartikeln beschrieben, die mit einer Schicht aus Ammoniummolybdat umhüllt sind. Der Anteil des Ammoniummolybdats an der umhüllten Stärke beträgt 12 %, die auf das Gewicht der Stärke bezogen sind. Die mit Ammoniummolybdat umhüllten Stärkepartikeln eignen sich in besonderem Maße als Füllstoff für PVC.

In der JP-OS 4-174 795 wird ein Stärkeleim zum Beschichten von Papier beschrieben. In dem Stärkeleim befindet sich dispergierte wasserfreie Kieselsäure. Die Kieselsäure wird dabei in einer Menge von 0,01 bis 5 %, bezogen auf die Menge der Stärke, eingesetzt.

Die der Erfindung zugrundeliegende Aufgabe besteht darin, ein Verfahren zur Herstellung stabilisierter Stärke zu schaffen, die eine hohe thermische, mechanische und chemische Stabilität aufweist und vielseitig eingesetzt werden kann. Das Verfahren soll leicht und schnell durchführbar sein.

Die der Erfindung zugrundeliegende Aufgabe wird dadurch gelöst, daß eine wäßrige Stärkesuspension mit einer Stärkekonzentration von 5 bis 50 Gew.-% mit einer wäßrigen Metallsalzlösung, die TiOSO₄ oder TiOCl₂ oder Al₂(SO₄)₃ oder NaAlO₂ oder Fe(NO₃)₃ oder FeSO₄ oder ZnCl₂ oder Na₂SiO₃ oder SbCl₃ oder ZrOSO₄ oder ZrOCl₂ oder MgCl₂ oder SnCl₄ oder Mischungen davon in einer Metallsalzkonzentration von 10 bis 50 Gew.-% enthält, bei einem pH-Wert von 3 bis 10 im Verhältnis Stärkesuspension : Metallsalzlösung = 1 : 5 bis 10 : 1 versetzt wird und die stabilisierte Stärke anschließend abgetrennt, gewaschen und getrocknet wird.

Unter Stärke ist Amylose oder Amylopektin oder eine Mischung aus Amylose und Amylopektin zu verstehen. Amylose ist durchschnittlich aus 300 Glucopyranosen unverzweigt aufgebaut. Amylopektin setzt sich aus verzweigten Makromolekülen mit über tausend Glucosemolekülen Zusammen. Als Mischung von Amylose und Amylopektin können Reisstärke, Kartoffelstärke, Weizenstärke, vorzugsweise Maisstärke eingesetzt werden. Reisstärke, Kartoffelstärke, Weizenstärke und Maisstärke bestehen in der Regel aus 20 bis 30 % Amylose und 70 bis 80 % Amylopektin.

Es hat sich in überraschender Weise gezeigt, daß die einzelnen Teilchen der Stärkesuspension durch dieses Verfahren gleichmäßig mit einer geschlossenen Schutzschicht umhüllt werden können. Die nach diesem Verfahren hergestellte stabilisierte Stärke weist daher eine besonders hohe thermische, mechanische und chemische Stabilität auf.

Dabei ist vorteilhaft, daß Porosität, Rauhigkeit, Absorptionsverhalten und Dispergierbarkeit der stabilisierten Stärke durch die Wahl des Materials der Schutzschicht relativ vielen Anwendungsgebieten angepaßt werden können.

Eine bevorzugte Ausgestaltung der Erfindung besteht darin, daß ein pH-Wert von 5 bis 8 eingestellt wird. Dies hat den Vorteil, daß das Substrat aus Stärke in relativ kurzer Zeit mit einer Schutzschicht umhüllt werden kann.

Nach einer weiteren bevorzugten Ausgestaltung der Erfindung beträgt die Größe der Teilchen der Stärkesuspension 1 bis 150 »m. Beträgt die Größe der Teilchen der Stärkesuspension 1 bis 150 »m, so läßt sich eine stabilisierte Stärke herstellen, die auf einfache Weise mit synthetischen Polymeren kombiniert werden kann.

Eine weitere Ausgestaltung der Erfindung besteht darin, daß die Größe der Teilchen der Stärkesuspension 5 bis 25 »m beträgt. Dadurch läßt sich eine stabilisierte Stärke herstellen, die relativ vielseitig verwendbar ist.

Die stabilisierte Stärke kann in besonders vorteilhafter Weise als Füllstoff oder Pigment in Kunststoffen, Papier, Lacken, Farben, Kosmetika, photochemischen Stoffen oder pharmazeutischen Produkten verwendet werden. Dadurch läßt sich die Qualität von Kunststoffen, Papier, Lacken, Farben, Kosmetika, photochemischen Stoffen oder pharmazeutischen Produkten verbessern.

Die Erfindung wird anhand des nachstehenden Beispiels näher erläutert.

### Beispiel:

100 g Maisstärke werden in 500 ml Wasser dispergiert. Der pH-Wert der Suspension wird mit 1 ml einer 10 %igen NaOH-Lösung auf pH 7 eingestellt. Anschließend werden 110 ml einer TiOCl₂-Lösung, die 18,6 g TiOCl₂ enthält, innerhalb von 45 Minuten zugesetzt. Gleichzeitig erfolgt die Zugabe einer 10 %igen NaOH-Lösung, wodurch ein pH-Wert von 6 bis 8 eingestellt wird. Nach 60-minütigem Rühren wird die stabilisierte Stärke abfiltriert, gewaschen und getrocknet.

## Patentansprüche

1. Verfahren zur Herstellung stabilisierter Stärke, dadurch gekennzeichnet, daß eine wäßrige Stärkesuspension mit einer stärkekonzentration von 5 bis 50 Gew.-% mit einer wäßrigen Metallsalzlösung, die TiOSO₄ oder TiOCl₂ oder Al₂(SO₄)₃ oder NaAlO₂ oder Fe(NO₃)₃ oder FeSO₄ oder ZnCl₂ oder Na₂SiO₃ oder SbCl₃ oder ZrOSO₄ oder ZrOCl₂ oder MgCl₂ oder SnCl₄ oder Mischungen davon in einer Metallsalzkonzentration von 10 bis 50 Gew.-% enthält, bei einem pH-Wert von 3 bis 10 im Verhältnis
Stärkesuspension : Metallsalzlösung = 1 : 5 bis 10 : 1
versetzt wird und die stabilisierte Stärke anschließend abgetrennt, gewaschen und getrocknet wird.

2. Verfahren nach Anspruch 1, dadurch gekennzeichnet, daß ein pH-Wert von 5 bis 8 eingestellt wird.

3. Verfahren nach Anspruch 1 oder 2, dadurch gekennzeichnet, daß die Größe der Teilchen der Stärkesuspension 1 bis 150 »m beträgt.

4. Verfahren nach Anspruch 3, dadurch gekennzeichnet, daß die Größe der Teilchen der Stärkesuspension 5 bis 25 »m beträgt.

## Claims

1. A process of producing stabilized starch, characterized in that an aqueous metal salt solution which contains TiSO₄ or TiOCl₂ or Al₂(SO₄)₃ or NaAlO₂ or Fe(NO₃) or FeSO₄ or ZnCl₂ or Na₂SiO₃ or SbCl₃ or ZrOSO₄ or ZrOCl₂ or MgCl₂ or SnCl₄ or mixtures thereof in a metal salt concentration from 10 to 50% by weight is added to an aqueous starch suspension having a starch concentration from 5 to 50% by weight at a ratio
from 1 : 5 to 10 : 1 of the starch suspension to the metal salt suspension
to provide a pH from 3 to 10 and the stabilized starch is subsequently separated, washed, and dried.

2. A process according to claim 1, characterized in that a pH from 5 to 8 is adjusted.

3. A process according to claim 1 or 2, characterized in that the particles of the starch suspension have a size from 1 to 150 micrometers.

4. A process according to claim 3, characterized in that the particles of the starch suspension have a size from 5 to 25 micrometers.

## Revendications

1. Procédé de préparation d'amidon stabilisé, caractérisé en ce qu'il consiste à mélanger une solution aqueuse d'amidon ayant une concentration d'amidon de 5 à 50 % en poids à une solution aqueuse de sel métallique qui contient TiOSO₄ ou TiOCl₂ ou Al₂(SO₄)₃ ou NaAlO₂ ou Fe(NO₃)₃ ou FeSO₄ ou ZnCl₂ ou Na₂SiO₃ ou SbCl₃ ou ZrOSO₄ ou ZrOCl₂ ou MgCl₂ ou SnCl₄ ou leurs mélanges en une concentration du sel métallique de 10 à 50 % en poids à un pH de 3 à 10 dans le rapport
suspension d'amidon : solution de sel métallique = 1 : 5 à 10 : 1
et ensuite à séparer l'amidon stabilisé, à le laver et à le sécher.

2. Procédé suivant la revendication 1, caractérisé en qu'il consiste à régler le pH à une valeur de 5 à 8.

3. Procédé suivant la revendication 1 ou 2, caractérisé en ce que la dimension des particules de la suspension d'amidon est comprise entre 1 et 150 »m.

4. Procédé suivant la revendication 3, caractérisé en ce que la dimension des particules de la suspension d'amidon est comprise entre 5 et 25 »m.
